# FASCICULE DE BREVET EUROPEEN

(11) **EP 0 328 171 B1**
(45) Date de publication et mention de la délivrance du brevet: **13.04.1994**
(21) Numéro de dépôt: 89200082.9
(22) Date de dépôt: 16.01.1989
(51) Int. Cl.: B65G 45/00

(54) **Montage de lames racleuses pour le décrassage d'une bande transporteuse**
Halterung von Schabeblättern zum Reinigen von Förderbändern
Mounting of scraper blades for conveyor belts

(30) Priorité: 10.02.1988 BE 8800151
(43) Date de publication de la demande: 16.08.1989
(73) Titulaire: TECHNIC GUM, 7400 Soignies (BE)
(72) Inventeur: Davidts, Emmanuel, B-7190 Ecaussinnes (BE)
(74) Mandataire: Pieraerts, Jacques

(56) Documents cités:
- EP-A- 0 153 527
- WO-A-87/05585
- BE-A- 895 740
- US-A- 4 779 716

## Description

La présente invention se rapporte à un montage de lames racleuses pour le décrassage frontal ou tangentiel d'une bande transporteuse lors de son passage sur un tambour-moteur, et qui comporte un bâti sur lequel est fixé un élément de base dont est solidarisé un support amortisseur.

La demande européenne 0 153 527 décrit des moyens de raclage formés par des lames disposés en enfilement sur un support transversal. Les lames préconisées sont des éléments métalliques ou non métalliques et, dans de cas, elles peuvent être constituées en un élastomère d'une dureté shore de 90°.

Un assemblage de lames racleuses est destiné au décrassage du brin de retour d'une bande transporteuse dont un certain degré de flexibilité n'expose pas les lames racleuses aux sollicitations provoquées lors du décrassage frontal.

Les mêmes considérations s'appliquent au dispositif selon la demande WO 87/05585. Le dispositif de raclage selon ce document comprend des bras porteur d'une lame de raclage. Ces bras sont constitués d'une matière synthétique ou d'une matière présentant une certaine élasticité. Comme les conditions de raclage dans une installation du type décrit ne sont pas du type frontal ou tangentiel, l'angle d'attaque des lames est totalement différent ce qui implique des conditions de travail plus souple découlant également de la flexibilité ou souplesse relative du brin de retour.

L'invention a donc pour but de permettre un décrassage frontal ou tangentiel de la bande transporteuse pendant son passage sur le tambour -moteur. Dans ces circonstances la lame racleuse et son support se voient exposés à des chocs et des conditions de travail ce qui nécessitent un montage particulier de la lame racleuse.

Pour réaliser cet objectif conformément à l'invention, il est fixé au support amortisseur précité un bras porte-lame constitué d'un élastomère.

Dans une forme d'exécution préférentielle, l'élastomère précité a une dureté shore située entre 80° et 100°.

Dans une forme d'exécution particulièrement avantageuse, le porte-lame précité est évidé en arc de cercle du côté qui est dirigé vers le tambour-moteur précité.

D'autres détails et avantages de l'invention ressortiront de la description qui sera donnée ci-après d'un montage de lames racleuses selon l'invention. Cette description n'est donnée qu'à titre purement exemplatif et ne limite en rien l'invention.

La figure 1a montre schématiquement, selon une vue latérale, avec coupe partielle, le montage d'une lame racleuse disposée frontalement par rapport au tambour.

La figure 1b montre, en coupe et à une plus grande échelle, le montage du bras porte-lame sur son support amortisseur.

La figure 2 est une vue en perspective montrant plusieurs lames en position de travail.

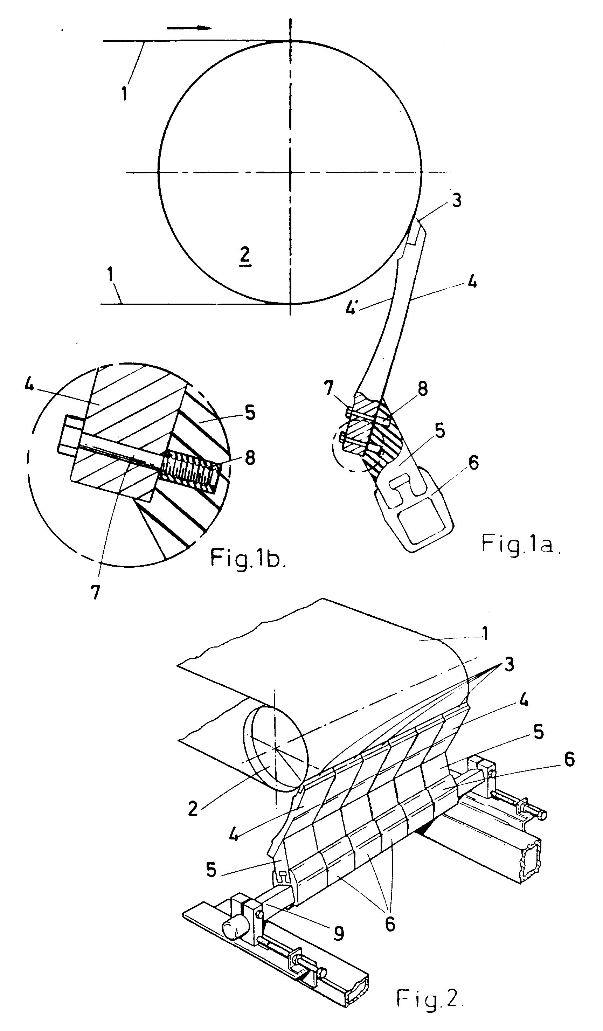

Comme le montre la figure 1a, qui représente schématiquement une bande transporteuse 1 et un tambour-moteur 2, la lame racleuse 3 attaque frontalement la bande transporteuse 1 dont le sens de déplacement est représenté par une flèche.

Par lame racleuse on entend l'élément racleur proprement dit constitué d'un métal dur, avec ou sans inserts céramiques. La lame racleuse est, conformément à l'invention, incorporée dans ou montée sur un bras porte-lame 4 fixée par sa base sur un support amortisseur 5.

Un tel support amortisseur 5 constitué d'un caoutchouc naturel ou synthétique, s'enfile sur un élément de base 6 en métal. Un tel assemblage entre un support amortisseur 5 et un élément de base 6 a fait l'objet du brevet belge n^{o} 905.082 au nom de la demanderesse.

La fixation du bras port-lame 4 sur le support amortisseur 5 peut se faire selon une technique connue, en faisant appel par exemple à des tirants 7 traversant la base du bras porte-lame 4 pour être vissés dans des douilles 8 munies d'un pas de vis intérieur immobilisées dans des alésages appropriés prévus dans le support amortisseur 5 en caoutchouc.

L'intérêt de l'invention réside essentiellement dans la combinaison de la matière dont est constitué le bras porte-lame 4 avec le support amortisseur 5.

Le bras porte-lame 4 est constitué d'un élastomère présentant une dureté shore qui se situe de préférence entre 80° et 100°.

Cette combinaison réunit l'intérêt du support amortisseur 5 et d'une certaine flexibilité du bras porte-lame 4. Celui-ci est en effet évidé en arc de cercle du côté qui est dirigé vers le tambour-moteur 2. Cette partie évidée est désignée par la référence 4′.

L'ensemble peut donc être considéré comme travaillant au cisaillement et la compression au niveau du support amortisseur 5 ce qui permet de compenser le rattrapage d'usure en maintenant une pression constante et élastique de la lame racleuse 3 sur la bande transporteuse 1. Le risque d'endommagement de la bande transporteuse qui existe normalement lorsqu'un corps étranger arrive à se coincer entre la lame racleuse et la bande est donc évité.

Lorsqu'une forte pression sera exercée sur la lame racleuse, le support amortisseur 5 agira comme une rotule en s'écartant de la bande transporteuse tout en maintenant une pression élastique sur celle-ci. L'élasticité du support amortisseur 5 et la flexibilité du bras porte-lame 4 contribuent toutes deux à un raclage qui se fait en douceur sous une pression appropriée. L'ensemble s'adapte non seulement aux aspirités provoquées par l'incrustation de corps étrangers mais également à l'amplitude des mouvements oscillants du bras inférieur de la bande convoyeuse lorsque la lame racleuse travaille à un autre endroit qu'en regard du tambour- moteur.

Les structures selon l'invention offrent de plus un faible coefficient de friction ce qui evite une prise de puissance supplémentaire.

Plusieurs lames racleuses disposées côte à côte ayant filées par leur élément de base 6 sur un profilé 9 constituent un ensemble dont la capacité de raclage et la souplesse sont condisérablement améliorées lorsqu'on les compare à divers types de racleurs connus.

Il est entendu que l'invention n'est pas limitée à la forme d'exécution qui vient d'être décrite et que bien des modifications pourraient y être apportées sans sortir du cadre de la présente demande de brevet.

## Revendications

1. Montage de lames racleuses pour le décrassage frontal ou tangentiel d'une bande transporteuse lors de son passage sur un tambour-moteur, et qui comporte un bâti sur lequel est fixé un élément de base dont est solidarisé un support amortisseur (5), caractérisé en ce qu'au support amortisseur précité (5) est fixé un bras porte-lame (4) constitué d'un élastomère.

2. Montage selon la revendication 1, caractérisé en ce que l'élastomère précité a une dureté shore située entre 80° et 100°.

3. Montage selon l'une quelconque des revendications 1 - 2, caractérisé en ce que le bras porte-lame précité (4) est évidé en arc de cercle du côté qui est dirigé vers le tambour-moteur précité (2).

4. Montage selon l'une quelconque des revendications 1 - 3, caractérisé en ce que l'élastomère précité dont est constitué le bras porte-lame précité (4) est constitué de polyuréthane.

## Claims

1. A mounting for scraper blades for the frontal or tangential cleaning of a conveyor belt as it passes over a drive cylinder, which comprises a frame on which is secured a base member to which is attached a damper support (5), characterised in that a blade-carrier arm (4) composed of an elastomer is secured to said damper support (5).

2. A mounting according to claim 1, characterised in that said elastomer has a shore hardness of between 80° and 100°.

3. A mounting according to either claim 1 or claim 2, characterised in that said blade-carrier arm (4) is recessed in a circular arc on the side which is directed towards said drive cylinder (2).

4. A mounting according to any one of claims 1 to 3, characterised in that said elastomer, from which said blade-carrier arm (4) is formed, comprises polyurethane.

## Patentansprüche

1. Halterung für Schabemesser zum frontalen oder tangentialen Säubern eines Transportbandes bei dessen Übergang über eine Motortrommel, wobei die Halterung einen unteren Teil aufweist, auf dem ein Basiselement befestigt ist, mit dem ein Dämpfungsträger (5) fest verbunden ist,
dadurch **gekennzeichnet,** daß der genannte Dämpfungsträger (5) auf einem Messertragarm (4) befestigt ist, der aus einem Elastomer besteht.

2. Halterung nach Anspruch 1,
dadurch **gekennzeichnet,** daß das genannte Elastomer eine Shore-Härte zwischen 80° und 100° besitzt.

3. Halterung nach Anspruch 1 oder 2,
dadurch **gekennzeichnet,** daß der genannte Messertragarm (4) auf der der genannten Motortrommel (2) zugekehrten Seite kreisbogenförmig ausgebuchtet ist.

4. Halterung nach einem beliebigen Anspruch 1 bis 3,
dadurch **gekennzeichnet,** daß das genannte Elastomer, aus dem der genannte Messertragarm (4) besteht, aus Polyurethan besteht.
